# EUROPÄISCHE PATENTSCHRIFT

(11) **EP 2 686 664 B1**
(45) Veröffentlichungstag und Bekanntmachung des Hinweises auf die Patenterteilung: **10.04.2019**
(21) Anmeldenummer: 12701719.2
(22) Anmeldetag: 23.01.2012
(51) Int. Cl.: G01N 21/05, G01N 21/55

(54) **FLACHE OPTISCHE MEDIENDETEKTION IN MINDESTENS ZWEI SCHICHTEN MIT OPTISCHER TRENNUNG**
FLAT OPTICAL DETECTION OF MEDIA IN AT LEAST TWO LAYERS WITH OPTICAL SEPARATION
DÉTECTION DE MILIEUX OPTIQUES PLANS EN AU MOINS DEUX COUCHES À SÉPARATION OPTIQUE

(30) Priorität: 18.03.2011 DE 102011005804
(43) Veröffentlichungstag der Anmeldung: 22.01.2014
(73) Patentinhaber: Robert Bosch GmbH, 70442 Stuttgart (DE)
(72) Erfinder: DAUB, Martina, 71287 Weissach (DE); RUPP, Jochen, 70178 Stuttgart (DE)
(86) Internationale Anmeldenummer: PCT/EP2012/050934
(87) Internationale Veröffentlichungsnummer: WO 2012/126645

(56) Entgegenhaltungen:
- WO-A1-2009/136869
- US-A1- 2006 251 371

## Beschreibung

Die vorliegende Erfindung betrifft ein Verfahren zum Nachweis von Flüssigkeiten und ein Verfahren zum Lenken von Lichtstrahlen.

### Stand der Technik

In miniaturisierten Analysesystemen beispielsweise für diagnostische Anwendungen werden Flüssigkeiten durch Kanäle geleitet, zueinander geführt oder getrennt. Diese Systeme bestehen zumeist aus einem Gerät für die Steuerung (Equipment) und einem auswechselbaren Einlegeteil (Disposable). Die im auswechselbaren Einlegeteil integrierten Kanäle sind im Ausgangszustand evakuiert beziehungsweise mit Schutzgas oder im einfachsten Falle mit Luft gefüllt. Eine genaue Flüssigkeitsdosierung ist für viele Anwendungen essentiell und erfordert daher ein Tracking von Flüssigkeiten, welches ein Signal ergibt, wenn eine Flüssigkeitsfront einen diskreten Streckenabschnitt befüllt hat. Für diesen Zweck werden optische Systeme vorzugsweise genutzt, die über Absorption oder Änderung des Reflektionswinkels einen Füllstand detektieren. Dabei werden an die Stellen, die überwacht werden sollen diskrete Bauelemente platziert bzw. über Lichtleiter gemessen. Die hierzu benötigten optischen Komponenten werden aus Kostengründen in das Analysegerät integriert.

EP 1058099 A2 offenbart ein System zur Messung von Flüssigkeiten mit einer Lichtquelle, einem Reflektor und einem Detektor mit Abflachungen und Erhöhungen. Die Abflachung befindet sich an der Spitze eines Dreiecks, das von der Lichtquelle, der abgeflachten Seite und dem Detektor gebildet wird. Der Winkel zwischen der Lichtquelle und einer Senkrechten zu der flachen Seite ist gleich dem Winkel zwischen dem Detektor und der Senkrechten zu der flachen Seite. Wenn die Erhöhung mit der Flüssigkeit in Kontakt ist, wird das Licht gemäß den relativen Brechungsindizes zum Detektor reflektiert. Das in EP 1058099 A2 offenbarte System kann beispielsweise im Tank eines Fahrzeugs, im Wassertank einer Befeuchtungsanlage, im Dosierungsbehälter eines automatischen medizinischen oder chemischen Analysengeräts oder zur Bestimmung von Wasser in einen geschlossenen elektronischen System verwendet werden.

US 20090226127 offenbart ein System zum optischen Nachweis von Analyten wie beispielsweise Liganden oder Glukose in Flüssigkeiten in einer mikrofluidischen Anwendung. Das in US 20090226127 offenbarte System umfasst eine Leitung zum Transport von Flüssigkeiten, wobei die Leitung einen ersten Bereich umfasst und einen ersten Wellenleitungsresonanzkörper, der optisch für eine erste Spektralkomponente in Resonanz ist, wenn die Flüssigkeit im ersten Bereich einen bestimmten Brechungsindex hat und wobei der erste Wellenleitungsresonanzkörper optisch für eine zweite Spektralkomponente in Resonanz ist, wenn die Flüssigkeit im ersten Bereich einen zweiten Brechungsindex hat.

DE 10 2004 055 032 B4 beansprucht eine Vorrichtung zur Bestimmung der Konzentration von in interstitieller Flüssigkeit gelöster Glukose mit einem optischen Körper, der zumindest teilweise mit einer Messmatrix umgeben ist, wobei die Messmatrix mit der interstitiellen Flüssigkeit in Kontakt steht. Die Vorrichtung umfasst auch eine Lichtquelle, die so angeordnet ist, dass sie Licht in den optischen Körper hineinstrahlt und einen Detektor, der so angeordnet ist, dass er von dem optischen Körper aufgrund von Totalreflexion transmittiertes und in eine bestimmte Richtung emittiertes Licht detektiert, wobei der optische Körper einen Brechungsindex besitzt, der bei einer Glukosekonzentration in der interstitiellen Flüssigkeit von 20-800 mg/dl um 0,175 bis 0,00005 größer als der Brechungsindex der Messmatrix ist.

Aus dem Dokument US 2006/0251371 A1 ist ein optischer Wellenleiter bekannt, welcher eine nicht feste Kernschicht umgeben von einem festen Material aufweist und eine elektrische Komponente zur Steuerung einer Probe durch den nicht festen Kern umfasst. Der offenbarte Wellenleiter kann mit einem zweiten Wellenleiter gekreuzt werden, um durch eine seitliche Einstrahlung von Licht in den nicht festen Kern des ersten Wellenleiters die im nicht festen Kern befindliche Probe mittels Fluoreszenz-Messungen zu analysieren.

Das Dokument WO 2009/136869 A1 beschreibt einen Sensorchip mit einem mikro- oder nanofluidischen Kanal und mindestens einer Nanostruktur in dem Kanal, wobei durch eine seitliche Einstrahlung von Licht eine in der Nanostruktur befindliche Probe analysiert werden kann.

Ein Vorteil der Erfindung ist, dass die optische Trennung im Messbereich aufgehoben wird und in das Einlegeteil integriert werden kann. Durch die optische Trennung zwischen der ersten Schicht und der zweiten Schicht werden Streulichteinflüsse minimiert. Die Einkopplung des Lichtes ist besonders einfach und platzsparend von der Seite realisierbar. Eine optimale optische Kopplung wird durch eine Vertiefung im Einlegeteil selbst gewährleistet. Der Mechanismus ist reversibel und beliebig oft wiederholbar. In einem gefüllten Kanal ist eine Detektion von Blasen möglich.

Gegenstand der Erfindung ist ein Verfahren nach dem Anspruch 1 zur Flüssigkeitsdetektion, wobei ein System zum optischen Nachweis von Flüssigkeiten verwendet wird, wobei die mikrofluidische Struktur in der ersten Schicht mit einem ersten Medium befüllt ist, das einen Brechungsindex hat, bei dem die Bedingungen für Totalreflexion in ersten Schicht erfüllt sind und wobei dann die mikrofluidische Struktur mit einem zweiten Medium befüllt wird und wobei sich der Brechungsindex im Messbereich aufgrund des ankommenden zweiten Mediums ändert, so dass die Bedingungen für die Totalreflexion nicht mehr erfüllt sind und der Lichtstrahl in die zweite Schicht geleitet wird und diese Ablenkung des Lichtstrahls mit dem Detektor gemessen wird und dadurch bestimmt wird, wenn die Flüssigkeitsfront den Messbereich erreicht hat.

Gegenstand der Erfindung ist des Weiteren ein Verfahren nach dem Anspruch 8 zum Lenken eines Lichtstrahls, wobei die mikrofluidische Struktur einer erfindungsgemäßen optischen Weiche mit einem ersten Medium befüllt ist, dass einen Brechungsindex hat, bei dem Totalreflexion in der ersten Schicht vorliegt und wobei dann die mikrofluidische Struktur mit einem zweiten Medium befüllt wird, wobei das zweite Medium einen Brechungsindex hat bei dem die Bedingungen für Totalreflexion in der ersten Schicht nicht mehr gegeben sind und dadurch der Lichtstrahl an der Stelle (3) der mikrofluidischen Struktur in die zweite Schicht geleitet wird, an der ersten Schicht und der zweiten Schicht optisch gekoppelt sind und der Lichtstahl dadurch seine Ausbreitungsrichtung ändert.

Das Einlegeteil umfasst mindestens zwei zusammenhängende Schichten 1 und 2. Das Einlegeteil kann weitere Schichten umfassen. Bei dem Einlegeteil kann es sich um einen Mehrschichtaufbau mit beispielsweise 2 bis 20 oder mehr Schichten handeln.

Die erste Schicht und die zweite Schicht sind für den eingekoppelten Lichtstrahl transparent. Die erste Schicht und die zweite Schicht können aus dem gleichen Material bestehen. Die Materialien für die erste Schicht und die zweite Schicht werden beispielsweise ausgewählt aus Polykarbonat, Polypropylen oder Glas.

Die optische Trennung (optische Trennschicht) kann beispielsweise aus gefärbtem Polykarbonat (PC), gefärbtem Polypropylen (PP) oder gefärbtem Glas bestehen.

In der ersten Schicht wird durch eine Lichtquelle ein Lichtstrahl eingekoppelt. Als Lichtquelle werden beispielsweise verwendet Glühlampen, LEDs oder Laserdioden. Das Licht hat beispielsweise eine Wellenlänge im Bereich IR, des sichtbaren Lichts oder UV. Geeignet ist beispielsweise Licht mit einer Wellenlänge zwischen 200 und 1200 nm. Die Einkopplung des Lichts erfolgt beispielsweise durch mechanischen Kontakt der Lichtquelle mit dem Linsensystem beziehungsweise dem Einlegeteil.

Der eingekoppelte Lichtstrahl wird durch totale interne Reflektion (TIR) (Totalreflexion) in der ersten Schicht gehalten wird. Die Totalreflexion ist ein besonders bei Licht beobachtbares Wellenphänomen. Sie tritt an der Grenzfläche zweier transparenter Medien (beispielsweise Wasser-Luft) auf. Im Falle von Licht, dass unterhalb eines kritischen Reflexionswinkels eintritt, wird dieses hierbei an der Grenzfläche nicht gebrochen, sondern vollständig reflektiert, das heißt, ins Ausgangsmedium zurückgeworfen, obwohl die Grenzfläche nicht beschichtet ist. Totalreflexion tritt an den äußeren Rändern von der ersten Schicht auf. Im Randbereich zu der zweiten Schicht tritt ebenfalls Totalreflexion auf, aber auch im Messbereich. Außerhalb des Messbereichs sind die erste Schicht und die zweite Schicht optisch getrennt, so dass das auftreffende Licht absorbiert werden kann, oder total reflektiert wird. Der in der ersten Schicht eingekoppelte Lichtstrahl kann deshalb nicht an einer beliebigen Stelle von der ersten Schicht in die zweite Schicht gelangen. Die optische Trennung kann beispielsweise erreicht werden durch Einfärbung der optischen Trennung oder durch eine Metallbeschichtung.

Die erste Schicht und die zweite Schicht sind im Messbereich optisch gekoppelt, d.h. unter geeigneten Bedingungen kann der in der ersten Schicht eingekoppelte Lichtstrahl im Messbereich von der ersten Schicht in die zweite Schicht geleitet werden. In einem Zustand des Systems findet trotz der optischen Kopplung zwischen der ersten Schicht und der zweiten Schicht keinen Übergang des Lichtstrahls statt. Dieser Zustand ist beispielsweise der Ausgangszustand. Die Totalreflexion im Messbereich wird dadurch erreicht, dass das Medium im Messbereich einen geeigneten Brechungsindex n3 mit n1 < n3 hat und der Lichtstrahl dadurch in der ersten Schicht gehalten wird. Dabei ist n3 der Brechungsindex des Mediums und n1 der Brechungsindex von beispielsweise Luft und n3 größer n1. In einer Ausführungsform der Erfindung ist das Medium im Messbereich Luft oder ein Gas, beispielsweise ein Schutzgas oder Vakuum (mit n1 = 1). Ein Beispiel für Bedingungen für den Übergang von der ersten Schicht in die zweite Schicht im Messbereich kann beispielsweise den Zeichnungen entnommen werden. In einer anderen Ausführungsform der Erfindung ist das Medium im Messbereich im Ausgangszustand bereits eine Flüssigkeit, die dann durch eine andere Flüssigkeit ersetzt werden kann.

Im Messbereich befindet sich mindestens eine mikrofluidische Struktur. Die mikrofluidische Struktur kann beispielsweise ein Kanal sein. In einer besonderen Ausführungsform ist die Form des Kanals eckig, beispielsweise quadratisch oder eckig und für das Einstellen des kritischen Winkels abgeschrägt. In einer Ausführungsform der Erfindung ist die mikrofluidische Struktur ein gerader Kanal. Der Messbereich hat die Form der mikrofluidischen Struktur, die mikrofluidische Struktur ist der Messbereich. Ist die mikrofluidische Struktur ein Kanal, dann hat der Messbereich die Form des Kanals. Der Messbereich kann die Gestalt einer Linie haben. Der Messbereich ist beispielsweise 5, 10, 15, 20, 25, 30, 35, 40, 50, 60, 70, 80, 90, 100, 110 Mikrometer lang. Der Messbereich hat im Querschnitt beispielsweise die Form eines Kreises, Ovals, Rechtecks oder Quadrats. Der Messbereich kann an unterschiedlichen Stellen eine unterschiedliche Form und/oder einen unterschiedlichen Durchmesser haben. Der Messbereich hat beispielsweise einen Durchmesser von 50, 100, 150, 200, 250, 300, 350, 400, 450, 500 Mikrometern. In einer anderen besonderen Ausführungsform ist die gesamte mikrofluidische Struktur der Messbereich.

Zum Nachweis von Flüssigkeiten, genauer Flüssigkeitsständen, werden neben dem Einlegeteil eine Lichtquelle und ein Detektor benötigt. Die Lichtquelle kann mit den zusammenhängenden Schichten direkt verbunden sein. Die Lichtquelle kann auch nur neben die zusammenhängenden Schichten gestellt werden. Die Lichtquelle kann Bestandteil eines Geräts zur Steuerung des Systems sein. Die Lichtquelle muss in jedem Fall so angeordnet beziehungsweise konstruiert sein, dass Lichtstrahlen nur in der ersten Schicht, nicht aber in der zweiten Schicht einkoppeln. Als Lichtquellen eignen sich beispielsweise Glühlampen, LED oder Laserdioden.

Der Detektor kann mit den zusammenhängenden Schichten direkt verbunden sein. Der Detektor kann auch nur neben die zusammenhängenden Schichten gestellt werden. Der Detektor kann Bestandteil eines Geräts zur Steuerung des Systems sein. Der Detektor muss in jedem Fall so angeordnet beziehungsweise konstruiert sein, dass er nur Lichtstrahlen in der zweiten Schicht, nicht aber in der ersten Schicht detektiert. Der Nachweis erfolgt beispielsweise durch ortsaufgelöste Transmissionsmessung. Als Detektor eignet sich beispielsweise CCD Module (Charge Coupled Device = CCD) oder Photodioden.

Die einzelnen Bestandteile nämlich Einlegeteil, Detektor und Lichtquelle können unabhängig von einander bereitgestellt und beispielsweise erst kurz vor oder bei der Messung zusammengesetzt werden. Ein Gerät zur Steuerung und Aufnahme des Einlegeteils kann die Lichtquelle und den Detektor enthalten. Das Einlegeteil kann dann ausgewechselt werden. Das Einlegeteil kann ein Einwegartikel oder ein mehrfach verwendbareres Teil sein. Der Aufbau bestehend aus einem Gerät zur Steuerung des Einlegeteils und dem Einlegeteil ist flexibel, da unterschiedliche Einlegeteile mit unterschiedlichen Designs in einem Gerät zum Einsatz kommen können. Die hier vorgestellte Erfindung stellt somit eine flexible Lösung dar, da nur eine Lichtquelle und ein Detektor vorteilhaft seitlich an das Bauteil kontaktiert werden und somit die örtliche Festlegung des Messpunktes beziehungsweise der Messpunkte beziehungsweise des Messbereichs nicht durch das Gerät limitiert beziehungsweise von vorne herein festgelegt ist.

Der Aufbau besteht aus zwei zusammenhängenden Schichten, die nur an der Messstelle optisch gekoppelt sind ansonsten durch eine Hilfsschicht optisch getrennt sind. In der ersten Schicht wird ein Lichtstrahl so eingekoppelt, dass er in dieser Schicht über Totalreflexion gefangen ist. Der Strahlengang ist durch den kritischen Winkel zwischen Umgebungsmedium und Schichtenmaterial definiert. In der ersten Schicht sind die erwähnten Kanalstrukturen für Fluide enthalten, die mit der Messstelle übereinstimmen müssen. Die zweite Schicht ist optisch für den in der ersten Schicht eingekoppelten Lichtstrahl ebenfalls transparent. Wenn das Medium im Kanal bzw. an der Messstelle eine Brechzahl beispielsweise von Luft hat, wird der Strahl in der ersten Schicht gehalten. Ändert sich die Brechzahl aufgrund eines ankommenden Mediums wird die Totalreflexionsbedingung nicht mehr erfüllt und der Strahl wird in die zweite Schicht geleitet. Besonders vorteilhaft ist hierbei, wenn die zweite Schicht einen Brechungsindex besitzt, der den Strahl in der zweiten Schicht durch Totalreflexion gefangen hält, beispielsweise wenn für die erste Schicht und die zweite Schicht das gleiche Material verwendet wird. Dann sind auch die Brechungsindices der Schichten gleich (n (Schicht (1)) = n (Schicht (2))).

Mit der Erfindung wird ein in einem Medium eingekoppelter Lichtstrahl von einer ersten optischen Schicht in eine zweite Schicht geleitet sobald sich der Brechungsindex n3 im Messbereich aufgrund von Medienänderung erhöht. Die zwei optischen Schichten sind voneinander optisch getrennt. Beispielsweise wenn ein Übergang von Luft zu Wasser stattfindet, ändert sich der Brechungsindex von 1 (Luft) nach 1,33 (Brechungsindex Wasser) und der kritische Winkel (der kritische Winkel von Luft liegt bei ungefähr 33°; der kritische Winkel von Wasser liegt bei ungefähr 57°).

Das System zum Nachweis von Flüssigkeiten ermöglicht eine genaue Flüssigkeitsdosierung die für viele Anwendungen essentiell ist. Mit dem System ist ein Tracking von Flüssigkeiten möglich und erzeugt ein Signal über den detektierten Lichtstrahl, wenn eine Flüssigkeitsfront einen diskreten Streckenabschnitt in einem mikrofluidischen System befüllt hat. Das System zum Nachweis von Flüssigkeiten kann zur Analyse beispielsweise für diagnostische Anwendungen eingesetzt werden. Das System kann immer dann angewendet werden, wenn Flüssigkeiten durch Kanäle geleitet, zueinander geführt oder getrennt werden. Dabei sind die im auswechselbaren Einlegeteil integrierten Kanäle vorzugsweise im Ausgangszustand evakuiert beziehungsweise mit Schutzgas oder im einfachsten Falle mit Luft gefüllt. Das System zum Nachweis von Flüssigkeiten kann beispielsweise in Lab-on-a-chip Anwendungen eingesetzt werden. Das System kann zum Nachweis von Blasen in Flüssigkeiten eingesetzt werden. Das Prinzip kann als optische Weiche eingesetzt werden.

Weitere Vorteile und vorteilhafte Ausgestaltungen der erfindungsgemäßen Gegenstände werden durch die Zeichnungen veranschaulicht und in der nachfolgenden Beschreibung erläutert. Dabei ist zu beachten, dass die Zeichnungen nur beschreibenden Charakter haben und nicht dazu gedacht sind, die Erfindung in irgendeiner Form einzuschränken. Es zeigen
- Fig. 1: eine schematische Schnittansicht eines Systems zum optischen Nachweis von Flüssigkeiten (Seitenansicht);
- Fig. 2: eine schematische Schnittansicht eines Systems zum optischen Nachweis von Flüssigkeiten mit Strahlengang ohne totale interner Reflektion (TIR);
- Fig. 3: eine schematische Schnittansicht eines Systems zum optischen Nachweis von Flüssigkeiten mit Strahlengang mit TIR und Absorption durch die optische Trennung;
- Fig. 4: eine schematische Schnittansicht eines Systems zum optischen Nachweis von Flüssigkeiten mit Strahlengang mit TIR und ohne Signal am Detektor;
- Fig. 5: eine schematische Schnittansicht eines Systems zum optischen Nachweis von Flüssigkeiten mit Strahlengang mit TIR und Signal am Detektor;
- Fig. 6: Schrägansicht eines Systems zum optischen Nachweis von Flüssigkeiten.

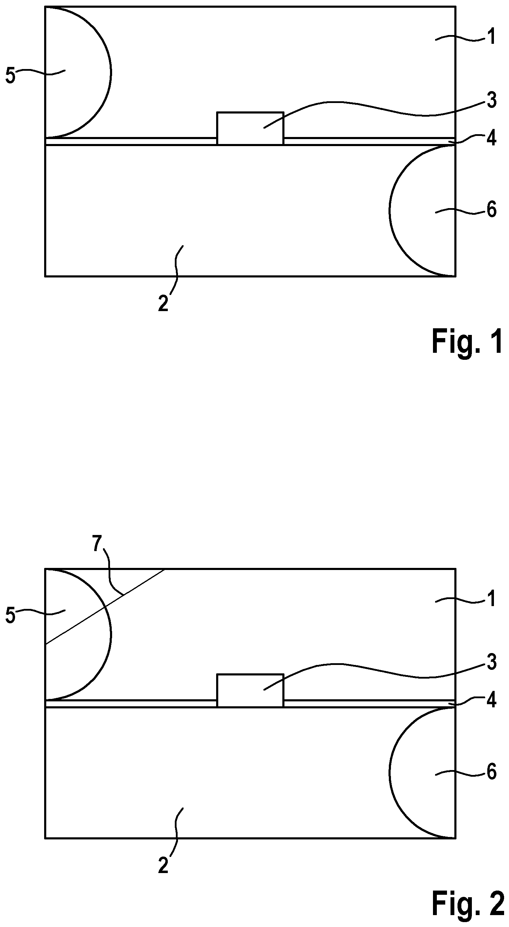

Figur 1 zeigt den prinzipiellen Aufbau des optischen Systems zum Nachweis von Flüssigkeiten mit einer ersten Schicht 1, einer zweiten Schicht 2, einem Messbereich 3, einer optischen Trennung 4, einer Lichtquelle 5 und einem Detektor 6.

Beispielsweise kann als Schichtenmaterial Polykarbonat mit n3=1.58 verwendet werden. Ist das Umgebungsmedium Luft mit einem Brechungsindex n1=1, dann liegt der Totalreflexionswinkel Theta bei 39,8°. Die Abmessungen für typische Messbereiche (Kanaldimension) liegen im Bereich einiger 10 bis 500 µm.

Der in Figur 1 dargestellte Aufbau kann beispielsweise ein Lab-on-a-Chip Analysesystem sein.

Figur 2 zeigt den prinzipiellen Aufbau des optischen Systems mit dem Strahlengang eines in der ersten Schicht 1 eingekoppelten Lichtstrahls ohne totale interne Reflektion (TIR) 7.

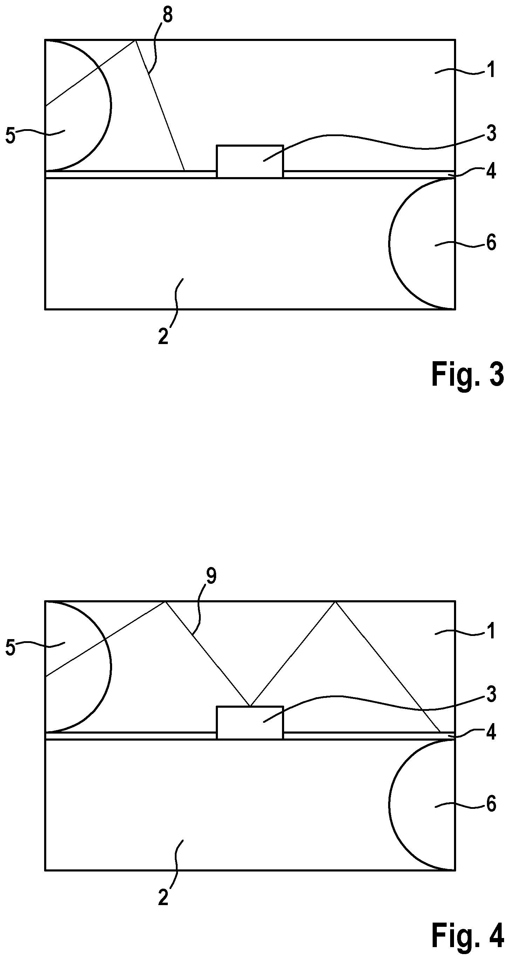

Figur 3 zeigt einen Verlauf 8 eines Strahlengangs eines in die erste Schicht 1 eingekoppelten Lichtstrahls im optischen System bei totaler interner Reflektion des Lichtstrahls in der ersten Schicht 1 und anschließender Absorption des Lichtstrahls an der optischen Trennung 4.

Figur 4 zeigt einen Verlauf 9 eines Strahlengangs eines in der ersten Schicht 1 eingekoppelten Lichtstrahls im optischen System bei totaler interner Reflektion und ohne Absorption an der optischen Trennung 4. Beispielsweise befindet sich außerhalb des optischen Systems (als Umgebungsmedium) und im Messbereich 3 Luft (n1 (Luft); n2 (PC); n3 (Medium)). Der Lichtstrahl wird in der ersten Schicht 1 reflektiert und kein Signal am Detektor empfangen.

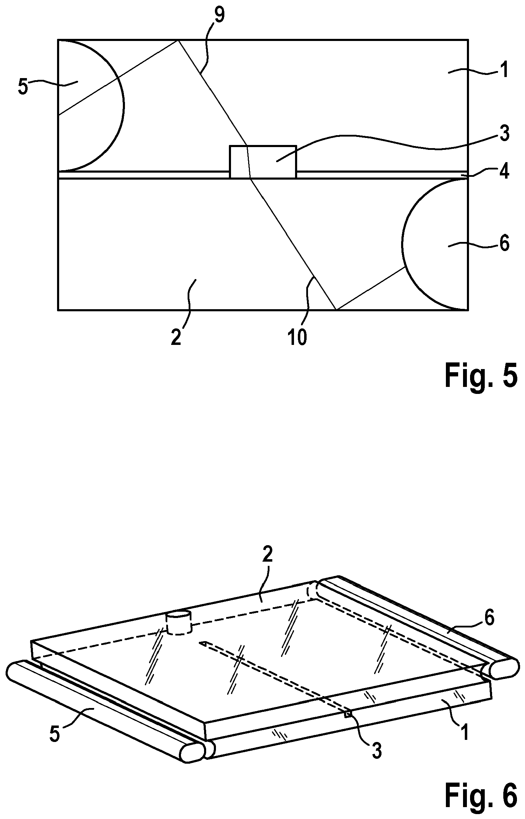

Figur 5 zeigt einen Verlauf 9 eines Strahlengangs eines in der ersten Schicht 1 eingekoppelten Lichtstrahls im optischen System bei totaler interner Reflektion und ohne Absorption an der optischen Trennung 4. Figur 5 zeigt den Vorgang des Schaltens zwischen erster und zweiter Schicht 1, 2. Bei einem Detektionsereignis (Befüllung) ändert sich der Strahlengang Verlauf 9 in den Verlauf 10. Beispielsweise gilt für die Brechungsindizes: n1 (z.B: Luft) <n2 (z.B. PC) </=n3 (Medium); n4.

Figur 6 zeigt beispielhaft ein System zur Steuerung eines optischen Systems mit Lichtquelle 5 und Detektor 6. Die Anordnung des Detektors 6 kann auch auf derselben Seite wie die Anordnung der Lichtquelle 5 erfolgen.

## Patentansprüche

1. Verfahren zur Flüssigkeitsdetektion mit einem System zum optischen Nachweis von Flüssigkeiten, wobei das System ein Einlegeteil mit zwei zusammenhängenden Schichten (1, 2) umfasst, wobei die erste Schicht (1) und die zweite Schicht (2) im Wesentlichen optisch getrennt sind (4) und nur im Messbereich (3) optisch gekoppelt sind, wobei sich im Messbereich (3) mindestens eine mikrofluidische Struktur zum Durchleiten von Flüssigkeiten befindet, wobei in der ersten Schicht (1) ein Lichtstrahl einkoppelbar ist und wobei die zweite Schicht (2) für den eingekoppelten Lichtstrahl transparent ist, **dadurch gekennzeichnet, dass** die mikrofluidische Struktur im Messbereich (3) in der ersten Schicht (1) mit einem ersten Medium befüllt ist, das einen Brechungsindex hat, bei dem die Bedingungen für Totalreflexion in der ersten Schicht (1) erfüllt sind und wobei dann die mikrofluidische Struktur mit einem zweiten Medium befüllt wird und wobei sich der Brechungsindex im Messbereich (3) aufgrund des ankommenden zweiten Mediums ändert, so dass die Bedingungen für die Totalreflexion nicht mehr erfüllt sind und der Lichtstrahl in die zweite Schicht (2) geleitet wird und diese Ablenkung des Lichtstrahls mit dem Detektor (6) gemessen wird und dadurch bestimmt wird, wenn die Flüssigkeitsfront den Messbereich (3) erreicht hat.

2. Verfahren nach Anspruch 1, **dadurch gekennzeichnet, dass** die erste Schicht (1) und die zweite Schicht (2) durch eine Hilfsschicht optisch getrennt sind (4).

3. Verfahren nach einem der Ansprüche 1 oder 2, **dadurch gekennzeichnet, dass** die mikrofluidische Struktur ein Kanal ist.

4. Verfahren nach einem der Ansprüche 1 bis 3, **dadurch gekennzeichnet, dass** der eingekoppelte Lichtstrahl in der ersten Schicht (1) durch totale interne Reflektion (TIR) gehalten wird.

5. Verfahren nach einem der Ansprüche 1 bis 4, **dadurch gekennzeichnet, dass** das Medium in der mikrofluidischen Struktur im Messbereich (3) einen Brechungsindex mit n1 < n3 hat, wobei n3 der Brechungsindex des Mediums und n1 der Brechungsindex von Luft ist, und der Lichtstrahl dadurch in der ersten Schicht (1) gehalten wird.

6. Verfahren nach einem der Ansprüche 1 bis 5, **dadurch gekennzeichnet, dass** das Medium eine Flüssigkeit ist.

7. Verfahren nach einem der Ansprüche 1 bis 6 umfassend eine Lichtquelle (5) und einen Detektor (6).

8. Verfahren zum Lenken eines Lichtstrahls mit einer optische Weiche, wobei die optische Weiche eine Lichtquelle (5), einen Detektor (6) und zwei zusammenhängende Schichten (1, 2) umfasst, wobei die erste Schicht (1) und die zweite Schicht (2) im Wesentlichen optisch getrennt sind (4) und nur im Bereich der Weiche optisch gekoppelt sind und wobei sich im Bereich der Weiche mindestens eine mikrofluidische Struktur zum Durchleiten von Flüssigkeiten befindet und wobei in der ersten Schicht (1) ein Lichtstrahl eingekoppelt werden kann und wobei die zweite Schicht (2) für den eingekoppelten Lichtstrahl ebenfalls transparent ist, **dadurch gekennzeichnet, dass** die mikrofluidische Struktur der optischen Weiche mit einem ersten Medium befüllt ist, dass einen Brechungsindex hat, bei dem Totalreflexion in der ersten Schicht (1) vorliegt und wobei dann die mikrofluidische Struktur mit einem zweiten Medium befüllt wird, wobei das zweite Medium einen Brechungsindex hat bei dem die Bedingungen für Totalreflexion in der ersten Schicht (1) nicht mehr gegeben sind und dadurch der Lichtstrahl an der Stelle (3) der mikrofluidischen Struktur in die zweite Schicht (2) geleitet wird, an der ersten Schicht (1) und der zweiten Schicht (2) optisch gekoppelt sind und der Lichtstrahl dadurch seine Ausbreitungsrichtung ändert.

## Claims

1. Method for detecting liquids using a system for the optical verification of liquids, wherein the system comprises an insert part with two contiguous layers (1, 2), wherein the first layer (1) and the second layer (2) are substantially optically separated (4) and only optically coupled in the measurement region (3), wherein at least one microfluidic structure for passing liquids is situated in the measurement region (3), wherein a light beam is able to be input coupled into the first layer (1) and wherein the second layer (2) is transparent to the input-coupled light beam, **characterized in that** the microfluidic structure in the measurement region (3) is filled with a first medium in the first layer (1), said medium having a refractive index at which the conditions for total-internal reflection are satisfied in the first layer (1) and wherein, then, the microfluidic structure is filled with a second medium and wherein the refractive index in the measurement region (3) changes on account of the arriving second medium such that the conditions for total-internal reflection are no longer satisfied and the light beam is guided into the second layer (2) and this deflection of the light beam is measured by the detector (6) and the arrival of the liquid front in the measurement region (3) is determined thereby.

2. Method according to Claim 1, **characterized in that** the first layer (1) and the second layer (2) are optically separated (4) by way of an auxiliary layer.

3. Method according to either of Claims 1 and 2, **characterized in that** the microfluidic structure is a channel.

4. Method according to any one of Claims 1 to 3, **characterized in that** the input-coupled light beam is kept in the first layer (1) by total-internal reflection (TIR).

5. Method according to any one of Claims 1 to 4, **characterized in that** the medium in the microfluidic structure in the measurement region (3) has a refractive index with n1 < n3, where n3 is the refractive index of the medium and n1 is the refractive index of air, and the light beam is kept in the first layer (1) as a result thereof.

6. Method according to any one of Claims 1 to 5, **characterized in that** the medium is a liquid.

7. Method according to any one of Claims 1 to 6, comprising a light source (5) and a detector (6).

8. Method for steering a light beam using an optical switch, wherein the optical switch comprises a light source (5), a detector (6) and two contiguous layers (1, 2), wherein the first layer (1) and the second layer (2) are substantially optically separated (4) and only optically coupled in the region of the switch and wherein at least one microfluidic structure for passing liquids is situated in the region of the switch and wherein a light beam can be input coupled into the first layer (1) and wherein the second layer (2) is likewise transparent to the input-coupled light beam, **characterized in that** the microfluidic structure of the optical switch is filled with a first medium that has a refractive index at which total-internal reflection is present in the first layer (1) and wherein, then, the microfluidic structure is filled with a second medium, wherein the second medium has a refractive index at which the conditions for total-internal reflection in the first layer (1) are no longer provided and, as a result, the light beam is guided into the second layer (2) at the position (3) of the microfluidic structure at which the first layer (1) and the second layer (2) are optically coupled and the light beam changes its direction of propagation as a result thereof.

## Revendications

1. Procédé de détection de liquides comportant un système de détection optique de liquides, dans lequel le système comprend une pièce à insérer comportant deux couches adhérentes (1, 2), dans lequel la première couche (1) et la deuxième couche (2) sont sensiblement séparées optiquement (4) et sont couplées optiquement uniquement dans la zone de mesure (3), dans lequel au moins une structure microfluidique destinée à conduire des liquides se trouve dans la zone de mesure (3), dans lequel un faisceau lumineux peut être couplé dans la première couche (1) et dans lequel la deuxième couche (2) est transparente pour le faisceau lumineux couplé, **caractérisé en ce que** la structure microfluidique se trouvant dans la zone de mesure (3) dans la première couche (1) est remplie d'un premier milieu ayant un indice de réfraction pour lequel les conditions de réflexion totale dans la première couche (1) sont satisfaites, dans lequel la structure microfluidique est ensuite remplie d'un deuxième milieu et dans lequel l'indice de réfraction dans la zone de mesure (3) varie en raison du deuxième milieu introduit, de sorte que les conditions de réflexion totale ne sont plus remplies et que le faisceau lumineux est dirigé vers la deuxième couche (2), cette déviation du faisceau lumineux étant mesurée au moyen du détecteur (6) et étant ainsi déterminée lorsque le front de liquide a atteint la zone de mesure (3).

2. Procédé selon la revendication 1, **caractérisé en ce que** la première couche (1) et la deuxième couche (2) sont séparées optiquement par une couche auxiliaire (4).

3. Procédé selon l'une des revendications 1 ou 2, **caractérisé en ce que** la structure microfluidique est un canal.

4. Procédé selon l'une des revendications 1 à 3, **caractérisé en ce que** le faisceau lumineux couplé est maintenu dans la première couche (1) par réflexion interne totale (TIR).

5. Procédé selon l'une des revendications 1 à 4, **caractérisé en ce que** le milieu se trouvant dans la structure microfluidique dans la zone de mesure (3) possède un indice de réfraction tel que n1 < n3, où n3 est l'indice de réfraction du milieu et n1 est l'indice de réfraction de l'air, le faisceau lumineux étant ainsi maintenu dans la première couche (1).

6. Procédé selon l'une des revendications 1 à 5, **caractérisé en ce que** le milieu est un liquide.

7. Procédé selon l'une des revendications 1 à 6, comprenant une source lumineuse (5) et un détecteur (6).

8. Procédé de déviation d'un faisceau lumineux au moyen d'un séparateur optique, dans lequel le séparateur optique comprend une source lumineuse (5), un détecteur (6) et deux couches adhérentes (1, 2), dans lequel la première couche (1) et la deuxième couche (2) sont sensiblement séparées optiquement (4) et sont couplées optiquement uniquement dans la zone du séparateur optique, dans lequel au moins une structure microfluidique destinée à conduire des liquides se trouve dans la zone du séparateur optique, dans lequel un faisceau lumineux peut être couplé dans la première couche (1) et dans lequel la deuxième couche (2) est également transparente pour le faisceau lumineux couplé, **caractérisé en ce que** la structure microfluidique du séparateur optique est remplie d'un premier milieu qui possède un indice de réfraction pour lequel une réflexion totale est présente dans la première couche (1), et dans lequel la structure microfluidique est ensuite remplie d'un deuxième milieu,
dans lequel le deuxième milieu possède un indice de réfraction pour lequel les conditions de réflexion totale dans la première couche (1) ne sont plus données et ainsi le faisceau lumineux est dirigé vers la deuxième couche (2) à l'emplacement (3) de la structure microfluidique, et est couplé optiquement à la première couche (1) et à la deuxième couche (2), le faisceau lumineux subissant ainsi une modification de sa direction de propagation.
